# EUROPÄISCHE PATENTSCHRIFT

(11) **EP 0 842 993 B1**
(45) Veröffentlichungstag und Bekanntmachung des Hinweises auf die Patenterteilung: **27.09.2000**
(21) Anmeldenummer: 96118437.1
(22) Anmeldetag: 18.11.1996
(51) Int. Cl.: C09D 7/14, C09D 5/02, C09D 17/00

(54) **Verfahren zur Herstellung von Instantfarbpulvern und nach dem Verfahren hergestellte Instantfarbpulver**
Method for the manufacture of instant colourant powders and instant colourant powders made by said method
Procédé de préparation de poudres de colorants instantanées et poudres de colorants instantanées ainsi préparées

(43) Veröffentlichungstag der Anmeldung: 20.05.1998
(73) Patentinhaber: Ultramarinfabrik Schindlerswerk Sächsisches Blaufarbenwerk GmbH, 08318 Schindlerswerk (DE); Rubersteinwerk GmbH, 09350 Lichtenstein (DE)
(72) Erfinder: Bochmann, Gerd, Dipl.-Chem., 08280 Albernau (DE); Brückner, Monika, 08324 Bockau (DE)
(74) Vertreter: Helge, Reiner, Dipl.-Ing.

(56) Entgegenhaltungen:
- EP-A- 0 670 352
- WO-A-93/09187
- CH-A- 352 770
- FR-A- 1 189 840
- GB-A- 906 345
- GB-A- 2 135 690

## Beschreibung

Verfahren zur Herstellung von Instantfarbpulvern und nach dem Verfahren hergestellte Instantfarbpulver

Die Erfindung betrifft ein Verfahren zur Herstellung von Instantfarbpulvern, insbesondere von Dispersionsfarbpulvern und nach dem Verfahren hergestellte Instantfarbpulver.

Bekannt sind geleimte Trockenfarben, zum Beispiel geleimte Wandfarben, die zur Verarbeitung in einer Flüssigkeit angerührt werden. Der Nachteil dieser Farben besteht in der relativ langen Quellzeit und im sehr niedrigen Dispergiergrad. Diese Farben sind nicht maschinenverarbeitbar und nach längerer Standzeit erfolgt eine Trennung der Bestandteile, das heißt, die eingerührten Pulverbestandteile setzen sich ab.

Weiterhin sind Pulverfarben, zum Beispiel pulverförmige Dispersionsfarben, bekannt, bei denen ein Pulver in eine Flüssigkeit mittels einer speziellen Technik eingerührt wird. Nach einer entsprechenden Quellzeit und entsprechendem Dispergieraufwand ist diese Farbe gebrauchsfertig. Sie weist zwar einen relativ hohen Dispergiergrad auf, ist aber nur bedingt maschinenverarbeitbar.

Die Aufgabe besteht darin, ausgehend von den Nachteilen der bekannten trockenen Farben bzw. Pulverfarben, ein Instantfarbpulver zu schaffen, das mittels einfacher Technik ohne Dispergieraufwand in eine Flüssigkeit eingerührt wird, ohne Quellzeit sofort maschinenverarbeitbar ist und eine stabile Dispersion bildet.

Diese Aufgabe ist erfindungsgemäß dadurch gelöst, daß in einem ersten Schritt ein Pigment-Extender-Partikel gebildet wird, indem ein Pigmentkorn auf ein Extenderkorn in Anwesenheit oberflächenaktiver Stoffe (Netzmittel) aufgepreßt wird. Durch Kollern bei entsprechend langer Maschinenzeit (Kollerzeit) erfolgt eine trockene Benetzung sowie eine Vordispergierung. Das Mischungsverhältnis von Pigmentkorn und Extenderkorn wird im Bereich von 1:1 bis 1:100 eingestellt.

In einem zweiten Schritt wird ein Additivkonzentratgemisch in flüssiger und/oder pastöser Form auf die Pigment-Extender-Partikel aufgezogen. Zur Bildung des Additivkonztentratgemisches werden alkalisch aufgeschlossene rheologische Additive, Filmbildehilfsmittel, Verlaufsmittel, Entschäumer und Dispergiermittel vermischt, wobei die Konzentrationen der einzelnen Komponenten

| | |
|---|---|
| 50-60% | rheologisch Additiv (aufgeschlossen) |
| 15-20% | Filmbildehilfsmittel |
| 5-10% | Verlaufsmittel |
| 10-15% | Entschäumer |
| 10-15% | Dispergiermittel |

betragen. Die rheologischen Additive, vorzugsweise Bentonite und Smectite werden aufgeschlossen, indem sie mit einer entsprechenden Menge Flüssigkeit bei pH-Wert >7 unter Verwendung von Benetzungsmitteln im Verhältnis 1:10:1 bis 5:100:5, vorzugsweise 4:40:3 dispergiert werden.

Das Additivkonzentratgemisch wird mit dem Pigment-Extender-Partikelgemisch in innigen Kontakt gebracht und dabei in flüssiger und/oder pastöser Form auf die Pigment-Extender-Partikel aufgezogen (z. B. verkollert). Das Mengenverhältnis wird auf 1:10 bis 1:20, vorzugsweise auf 1:15 eingestellt.

In einem dritten Schritt werden die mit dem Additivkonzentratgemisch behandelten Pigment-Extender-Partikel mit einem Dispersionspulver in Kontakt gebracht und vermischt. Die mit dem Additivkonzentratgemisch aufgezogenen Pigment-Extender-Partikel werden mit dem Dispersionspulver vermischt. Das Mischungsverhältnis von 19:1 bis 2:1 wird vorzugsweise auf 10:1 bis 3:1 eingestellt.

In einem letzten Schritt wird das so erhaltene Gemisch zur Vervollständigung und zur Verbesserung der "trockenen" Benetzung sowie Vordispergierung homogenisiert.

Danach erhält man eine "trocken benetzte" sowie "trocken vordispergierte" und redispergierbare Zubereitung in Pulver- oder Granulatform mit einem entsprechenden Schüttgewicht und verbessertem Redispergierverhalten. Ein vorgefertigtes Pigment-Extender-Partikelgemisch mit einem Schüttgewicht von 800 g/l bis 1200 g/l wird durch Mischen mit flüssigen und/oder pastösen Komponenten, welche rheologische Additive, oberflächenaktive Substanzen sowie weichmachende Stoffe enthalten, so in Kontakt gebracht und anschließend mit einem entsprechenden Dispersionspulverbindemittel vermischt, daß die fertige Zubereitung bei Eintragen in Wasser mit geringen Scherkräften so vollkommen dispergiert, daß das hergestellte Dispersionsprodukt sofort maschinenverarbeitbar ist. Dabei wird das Gewichtsverhältnis zwischen Pigment-Extender-Partikelgemisch, Dispersionspulverbindemittel und flüssigen und/oder pastösen Komponenten von 100:50:1 bis 200:10:2 eingestellt.

Das nach dem Verfahren hergestellte Instantfarbpulver besteht aus einem Gemisch aus Pigmenten, Extendern, oberflächenaktiven Stoffen (Netzmittel), Additivkonzentratgemisch und Dispersionspulvern. Als Pigmente werden vorzugsweise anorganische Pigmente, wie Titanoxide, Eisenoxide, Ultramarinblau, Chromoxide, oder organische Pigmente verwendet.

Als Extender werden anorganische Extender, wie Calzite, Kreiden, Talcum, Kaoline, und Mikroextender, wie Aluminiumsilikate, verwendet.

Wird dieses Instantfarbpulver in Wasser eingerührt (aufgelöst), erhält man ein in kürzester Zeit mit vernachlässigbar geringem Dispergieraufwand bei vollständiger homogener Verteilung sofort maschinenverarbeitbares (airless) Anstrichmittel.

In einem Ausführungsbeispiel wird ein nach dem erfindungsgemäßen Verfahren hergestelltes Instantfarbpulver beschrieben.

Ein Instantfarbpulver für den Fassadenbereich setzt sich zusammen aus dem Pigment Titanweiß, einem Extendergemisch aus Calzit mit einer durchschnittlichen Korngröße von 10 µm und einer durchschnittlichen Korngröße von 2 µm sowie dem Mikroextender Aluminiumsilikat, Polycarbonsäuresalz als Netzmittel, Additivkonzentratgemisch und Dispersionspulver.

In einem Mahlgang werden

| | |
|---|---|
| 16,5% | Titanweiß |
| 2,5% | Mikroextender-Aluminiumsilikat |
| 41,3% | Calzit (10 µm Korngröße) |
| 8,3% | Calzit ( 2 µm Korngröße) |
| 0,3% | Polycarbonsäuresalz |

bezogen auf das Instantfarbpulver (gesamt) zu einem Pigment-Extender-Partikelgemisch verarbeitet.

Diesem Pigment-Extender-Partikelgemisch (68,9% bezogen auf das Gesamtinstantfarbpulver) werden 4,1% eines Additivkonzentratgemisches in einem weiteren Mahlgang hinzugefügt.

Abschließend werden diesem Pigment-Extender-Partikel-/Additivkonzentratgemisch 27% eines Dispersionspulvers zugesetzt und dieses homogenisiert.
Die Homogenisierung erfolgt zum Beispiel auf einer Contraplex-Weitkammermahlanlage.

Das so erhaltene Instantfarbpulver kann nach dem Eintragen in Wasser sofort maschinenverarbeitbar als Außenanstrichmittel verwendet werden.

## Patentansprüche

1. Verfahren zur Herstellung von Instantfarbpulver,
dadurch gekennzeichnet, daß
in einem ersten Schritt ein Pigment-Extender-Partikel gebildet wird, indem ein Pigmentkorn auf ein Extenderkorn in Anwesenheit eines oberflächenaktiven Stoffes (Netzmittel) aufgepreßt wird, in einem zweiten Schritt ein Additivkonzentratgemisch in flüssiger und/oder pastöser Form auf die Pigment-Extender-Partikel aufgezogen wird, in einem dritten Schritt die Pigment-Extender-Partikel mit einem Dispersionspulver in Kontakt gebracht und vermischt werden und in einem letzten Schritt dieses homogenisiert wird.

2. Verfahren nach Anspruch 1,
dadurch gekennzeichnet, daß
als Additivkonzentratgemisch rheologisch aufgeschlossene Additive, Filmbildehilfsmittel, Verlaufsmittel, Entschäumer und Dispergiermittel vermischt werden, wobei die Konzentrationen der einzelnen Komponenten
| | |
|---|---|
| 50-60% | rheologisches Additiv (aufgeschlossen) |
| 15-20% | Filmbildehilfsmittel |
| 5-10% | Verlaufsmittel |
| 10-15% | Entschäumer |
| 10-15% | Dispergiermittel |
betragen.

3. Verfahren nach Anspruch 2,
dadurch gekennzeichnet, **daß**
die rheologischen Additive, vorzugsweise Bentonite und Smectite, aufgeschlossen werden, indem sie mit einer entsprechenden Menge Flüssigkeit (pH-Wert >7) und unter Verwendung von Benetzungsmitteln im Verhältnis 1 : 10 : 1 bis 5 : 100 : 5, vorzugsweise 4 : 40 : 3 dispergiert werden.

4. Verfahren nach Anspruch 1,
dadurch gekennzeichnet, **daß**
das Mengenverhältnis von Pigment-Extender-Partikel und Additivkonzentratgemisch im Bereich von 1 : 10 bis 1 : 20 eingestellt wird.

5. Verfahren nach Anspruch 1,
dadurch gekennzeichnet, **daß**
die mit dem Additivkonzentratgemisch aufgezogenen Pigment-Extender-Partikel und das Dispersionspulver im Verhältnis von 19 : 1 bis 2 : 1 gemischt werden.

6. Verfahren nach Anspruch 1,
dadurch gekennzeichnet, **daß**
das Mischungsverhältnis von Pigmentkorn und Extenderkorn im Bereich von 1 : 1 bis 1 : 100 eingestellt wird.

7. Instantfarbpulver, hergestellt nach dem Verfahren gemäß Anspruch 1 bis 6,
dadurch gekennzeichnet, **daß**
das Instantfarbpulver aus einem Gemisch aus Pigmenten, Extendern, oberflächenaktiven Stoffen, Additivkonzentratgemisch und Dispersionspulver besteht.

8. Instantfarbpulver nach Anspruch 7,
dadurch gekennzeichnet, **daß**
die Pigmente vorzugsweise anorganische Pigmente wie Titanoxide, Eisenoxide, Ultramarinblau, Chromoxide sind.

9. Instantfarbpulver nach Anspruch 7,
dadurch gekennzeichnet, **daß**
die Pigmente organische Pigmente sind.

10. Instantfarbpulver nach Anspruch 7,
dadurch gekennzeichnet, **daß**
Extender anorganische Extender wie Calzite, Kreiden, Talcum, Kaoline, Aluminiumsilikate sind.

## Claims

1. Method for the manufacture of instant dye powder,
characterised in step one of the process by the generation of a pigment extender particle through pressing a pigment grain onto an extender grain in the presence of a surface-active substance (wetting agent); step two involves an additive concentrate mixture in liquid and/or paste form being absorbed by pigment extender particles and then, in step three, brought into contact and mixed with a dispersion powder which is followed, in the final step, by homogenisation.

2. Method according to claim 1,
characterised by mixing rheologically macerated additives, film forming auxiliary substances, levelling agents, antifoaming agents and dispersing agents as an additive concentrate mixture with the following component concentrations:
| | |
|---|---|
| 50 - 60 % | rheological additive (macerated) |
| 15 - 20 % | film forming auxiliary substances |
| 5 - 10 % | levelling agents |
| 10 - 50 % | antifoaming agents |
| 10 - 50 % | dispersing agents |

3. Method according to claim 2,
characterised by the maceration of rheological additives, preferably bentonites and smectites, by dispersing these with a specified amount of liquid (ph >7) using wetting agents at a ratio of
1:10:1 to 5:100:5,
and preferably 4 : 40 : 3.

4. Method according to claim 1,
characterised by setting the proportion of pigment extender particle and additive concentrate mixture at the range
1:10 to 1:20.

5. Method according to claim 1,
characterised by mixing the additive concentrate mixture absorbed by pigment extender particles and the dispersing agent at a ratio of
19:1 to 2:1.

6. Method according to claim 1,
characterised by setting the mixing ratio of pigment grain and extender grain at
1:1 to 1:100.

7. Instant dye powder, method according to claim 1 to 6, characterised by consisting of a mixture of pigments, extenders, surface-active agents, additive concentrate mixture and dispersing agent.

8. Instant dye powder according to claim 1,
characterised by the preferred use of inorganic pigments such as titanium oxides, iron oxides, ultramarine blue and chromium oxides.

9. Instant dye powder according to claim 7,
characterised by organic pigments.

10. Instant dye powder according to claim 7,
characterised by the extenders being inorganic extenders such as calcites, chalks, talcum, kaolins, aluminium silicates.

## Revendications

1. Procédé de fabrication de couleur en poudre agglomérée, caractérisé en ce que, dans une première étape, une particule de diluant pigmentaire est formée, un grain pigmentaire étant engagé par pression à l'aide d'un agent tensio-actif (agent mouillant) sur un grain de diluant, dans une deuxième étape, un mélange concentré additif sous forme liquide et/ou pâteuse est appliqué sur la particule de diluant pigmentaire, dans une troisième étape, la particule de diluant pigmentaire entre en contact et est mélangée avec une poudre de dispersion et dans une dernière étape, celle-ci est homogénéisée.

2. Procédé selon la revendication 1, caractérisé en ce que le mélange concentré additif est un mélange d'additifs dissous rhéologiques, d'agent auxiliaire filmogène, d'un produit nivelant, d'agent antimoussant et d'agent dispersant, dont les concentrations de chacun des constituants représentent :
| | |
|---|---|
| 50-60% | additif rhéologique (dissous) |
| 15-20% | agent auxiliaire filmogène |
| 5-10% | produit nivelant |
| 10-15% | agent antimoussant |
| 10-15% | agent dispersant |

3. Procédé selon la revendication 2, caractérisé en ce que les additifs rhéologiques, de préférence de la bentonite et de la smectite, sont dissous, en les dispersant avec une quantité adaptée de liquide (valeur pH >7) et en utilisant des agents mouillants à raison de 1 :10 :1 à 5 :100 :5, de préférence 4 :40 :3.

4. Procédé selon la revendication 1, caractérisé en ce que le rapport quantitatif de la particule de diluant pigmentaire et du mélange concentré additif est réglé dans une marge de 1 :10 à 1 :20

5. Procédé selon la revendication 1, caractérisé en ce que la particule de diluant pigmentaire, appliqué du mélange concentré additif, et la poudre de dispersion sont mélangées à raison de 19:1 à 2:1.

6. Procédé selon la revendication 1, caractérisé en ce que le rapport de mélange du grain pigmentaire et du grain de diluant est réglé dans une marge de 1 :1 à 1 :100.

7. Couleur en poudre agglomérée, fabriquée d'après le procédé selon les revendications 1 à 6, caractérisée en ce que la couleur en poudre agglomérée est composée d'un mélange de pigments, de diluants, d'agents tensio-actifs, de mélange concentré additif et de poudre de dispersion.

8. Couleur en poudre agglomérée selon la revendication 7, caractérisée en ce que les pigments sont de préférence des pigments minéraux tels que les oxydes titaniques, les oxydes ferrosoférriques, l'outremer bleu et les oxydes chromiques.

9. Couleur en poudre agglomérée selon la revendication 7, caractérisée en ce que les pigments sont des pigments organiques.

10. Couleur en poudre agglomérée selon la revendication 7, caractérisée en ce que les diluants sont des diluants tels que les calcites, le farinage, le talc, les kaolins et les silicates d'aluminium.
